# EUROPÄISCHE PATENTSCHRIFT

(11) **EP 1 710 035 B1**
(45) Veröffentlichungstag und Bekanntmachung des Hinweises auf die Patenterteilung: **09.06.2010**
(21) Anmeldenummer: 06007115.6
(22) Anmeldetag: 04.04.2006
(51) Int. Cl.: B23D 13/00, B23D 43/02, B26D 1/06, B26D 3/06, B23D 21/00

(54) **Vorrichtung und Verfahren zum gratarmen Schneiden**
Device and method of machining with reduced burrs
Dispositif et procédé d'usinage réduisant les bavures

(30) Priorität: 04.04.2005 DE 102005015542
(43) Veröffentlichungstag der Anmeldung: 11.10.2006
(73) Patentinhaber: Pampus Automotive GmbH & Co. KG, 58540 Meinerzhagen (DE)
(72) Erfinder: Arcidiacone, Franco, 59846 Sundern (DE); Huperz, Ulrich, 57439 Attendorn (DE)
(74) Vertreter: Wenzel & Kalkoff

(56) Entgegenhaltungen:
- EP-A- 0 976 484
- JP-A- 2 124 211
- JP-A- 4 135 104
- US-A- 2 398 791
- US-A- 5 833 543
- PATENT ABSTRACTS OF JAPAN Bd. 2000, Nr. 11, 3. Januar 2001 (2001-01-03) -& JP 2000 218433 A (ARAI SEISAKUSHO:KK), 8. August 2000 (2000-08-08)
- PATENT ABSTRACTS OF JAPAN Bd. 012, Nr. 078 (M-675), 11. März 1988 (1988-03-11) -& JP 62 218012 A (MAZDA MOTOR CORP), 25. September 1987 (1987-09-25)
- KALPAKJIAN SEROPE: "Manufacturing Processes for Engineering Materials" 1984, ADDISON-WESLEY , READING, MASSACHUSETTS, USA , XP002390618 * Seite 502; Tabelle 8.5 * * Seite 516, Absatz 8.10 * * Seite 520; Tabelle 8.10 *
- PATENT ABSTRACTS OF JAPAN Bd. 1996, Nr. 12, 26. Dezember 1996 (1996-12-26) -& JP 08 215902 A (TOYODA MACH WORKS LTD), 27. August 1996 (1996-08-27)

## Beschreibung

Die Erfindung betrifft ein Schneidwerkzeug und ein Verfahren zum spanabhebenden Bearbeiten von Körpern aus Metall.

Schneidwerkzeuge zum spanabhebenden Bearbeiten von Körpern aus Metall, im Nachfolgenden Werkstück genannt, und Verfahren hierzu sind allgemein im Stand der Technik bekannt. In der Regel wird hierbei das Schneidwerkzeug in einer translatorischen oder rotatorischen Bewegung mit einer oder mehreren Schneidkanten unter definiertem Anpressdruck und Vorschub über das Werkstück geführt. Die von der bzw. den Schneidkanten des Werkzeugs bearbeiteten Flächen werden als Schnittfläche bezeichnet. Die Schnittfläche ist eben oder als Zylinderfläche ausgebildet, stets aber kontinuierlich, das heißt, sie weist keinen Höhenversatz auf. Sie kann jedoch mehrteilig sein, insbesondere Seitenflächen des Werkstücks umfassen, beispielsweise seitlich an einen Schnittflächengrund anschließende, schräg zum Schnittflächengrund stehende Seitenflächen. Die Schnittfläche schneidet die Oberfläche des Werkstücks mindestens an einer Schnittlinie, die als Außenkante bezeichnet ist.

Aus der EP 0 976 484 A2 ist ein Verfahren gemäß dem Oberbegriff des Anspruchs 15 und ein Schneidwerkzeug gemäß dem Oberbegriff des Anspruchs 1 bekannt, wobei das Schneidwerkzeug mindestens eine erste und eine zweite Schneidkante aufweist, die zur Bearbeitung von Abschnitten derselben Schnittfläche geeignet sind. Das Verfahren erfolgt in der Weise, dass kein Material des Werkstücks über die Außenkante hinaus verschoben wird.

Durch Materialverdrängung an den Außenkanten der Schnittfläche, besonders in Schnittrichtung, entstehen oft scharfkantige Grate. Die zackigen und scharfkantigen Grate stellen eine Verletzungsgefahr dar. Sie sind für nachfolgende Bearbeitungsschritte, wie z.B. Lackauftrag oder Verchromung nachteilig, da Beschichtungen auf den zackigen Graten nicht gut haften und sich bereits bei geringen Beanspruchungen wieder lösen. Die bei der spanabhebenden Bearbeitung entstehende Grate müssen daher vor der Weiterverarbeitung des Werkstücks aufwändig entfernt werden. Die Kosten für diese Nachbearbeitung sind erheblich. Alternativ wird auf die Nachbearbeitung verzichtet, dafür dann aber ein hoher Anteil von Ausschuss in Kauf genommen.

Daher besteht die Aufgabe der vorliegenden Erfindung darin, ein Schneidwerkzeug und ein Verfahren zum spanabhebenden Bearbeiten einer Schnittfläche eines Körpers aus Metall bereitzustellen, welche die Entstehung von Graten vermeiden und dadurch eine vereinfachte und kostengünstige Herstellung ermöglichen.

Erfindungsgemäß wird diese Aufgabe dadurch gelöst, dass ein Schneidwerkzeug zum spanabhebenden Bearbeiten einer Schnittfläche eines Körpers aus Metall mit mindestens einer ersten und einer zweiten Schneidkante, die zur Bearbeitung mindestens von Abschnitten derselben Schnittfläche geeignet und derart angeordnet sind, dass die Schnittrichtung der beiden Schneidkanten ungleich werden kann, dadurch gekennzeichnet ist, dass ein Prägestempel zwischen den beiden Schneidkanten angeordnet ist, wobei die Schneidkanten für translatorische Bewegungen bestimmt sind.

Das erfindungsgemäße Verfahren zum Erzeugen einer Schnittfläche an einem Werkstück aus Metall mittels spanabhebender Bearbeitung des Werkstücks durch ein Werkzeug mit mindestens einer Schneidkante, wobei die Schnittfläche mindestens eine Außenkante aufweist, und wobei die spanabhebende Bearbeitung in der Weise erfolgt, dass eine Verschiebung des Materials des Werkstücks über die Außenkante hinaus unterbleibt, ist gekennzeichnet durch die Schritte
- Durchführung einer Prägung des Werkstücks vor der spanabhebenden Bearbeitung,
- mindestens abschnittsweises Erzeugen der Schnittfläche durch eine erste spanabhebende Bearbeitung mit einer ersten Schneidkante in einer ersten Schnittrichtung und
- Erzeugen einer weiteren Abschnitts- oder vollständigen Schnittfläche durch eine zweite spanabhebende Bearbeitung mit der ersten oder einer zweiten Schneidkante, wobei die Schnittrichtung bei der zweiten spanabhebenden Bearbeitung entgegengesetzt der ersten Schnittrichtung ist.

Das Schneidwerkzeug ist zum Bearbeiten von Werkstücken aus metallischen Werkstoffen geeignet, jedoch kann es auch an weiteren Werkstoffen Anwendung finden, wie bspw. an Kunststoffen oder Holzwerkstoffen. Das Schneidwerkzeug weist mindestens eine erste und eine zweite Schneidkante auf, die zur Bearbeitung des entsprechenden Werkstoffs geeignet ist. Unter dem Begriff Schneidkante werden allgemein solche Abschnitte oder Bereiche des Schneidwerkzeugs verstanden, die geeignet sind, einen Span eines Werkstoffs mechanisch abzuheben. Die Schneidkante kann beispielsweise in Form einer Klinge oder einer oder mehrerer Kanten eines Schneidwerkzeugs ausgeführt sein. Beispielsweise kann ein erster Abschnitt der Schneidkante für die Bearbeitung des Schnittflächengrunds des Werkstücks ausgebildet sein, wobei weitere Abschnitte der Schneidkante für die Bearbeitung von Seitenflächen der Schnittfläche ausgebildet sind. Insbesondere können die Schneidkanten je nach zu bearbeitenden Werkstoff optimierte Schliff- und Spanwinkel aufweisen. Des weiteren kann das Schneidwerkzeug im Bereich der Schneidkanten aus einem Werkstoff bestehen, der an das zu bearbeitende Material angepasst ist.

Die erste und die zweite Schneidkante sind zur Bearbeitung mindestens von Abschnitten derselben Schnittfläche bestimmt. Die Schnittrichtung der zweiten Schneidkante ist hierbei ungleich der Schnittrichtung der ersten Schneidkante. Durch die Anordnung der Schneidkanten, nämlich zur Bearbeitung derselben Schnittfläche, jedoch in ungleichen Schnittrichtungen, ist es möglich, eine spanabhebende Bearbeitung an einem Werkstück auf zwei unterschiedliche Arten vorzunehmen. Entweder bearbeitet jede Schneidkante gleiche Abschnitte der Schnittfläche derart, daß der bei der Bearbeitung durch die erste Schneidkante entstehende Grat durch die zweite Schneidkante entfernt wird. Alternativ wird eine spanabhebende Bearbeitung an einem Werkstück so ausgeführt, dass die erste und die zweite Schneidkante des Werkzeugs im wesentlichen nebeneinander liegende Abschnitte der Schnittfläche derart bearbeiten, dass durch die Zuordnung der Abschnitte der Schnittfläche zu den Schnittrichtungen der Schneidkanten kein Grat entsteht. Eine spanabhebende Bearbeitung ist somit gratfrei in einem Arbeitsgang mit einem erfindungsgemäßen Werkzeug möglich.

Nach einer vorteilhaften Weiterbildung der Erfindung schneiden die Schneidkanten im Rahmen der vorgegebenen Toleranzen für die Bearbeitung des Körpers aus Metall in der Gebrauchslage in einer Ebene (Anspruch 2). Unter dem Begriff Ebene wird sowohl eine plane Fläche als auch beispielsweise eine Ebene entlang eines Kreisbogens verstanden. Durch eine derartige Ausgestaltung der Schneidkanten ist eine gleichmäßige Schnitttiefe und somit das Erzeugen einer durchgehenden und kontinuierlichen Schnittfläche sichergestellt.

Vorteilhaft zeigt die Schnittrichtung der Schneidkanten gegeneinander (Anspruch 3). Hierbei ist vorteilhaft, dass ein bei der abschnittsweisen Bearbeitung der Schnittfläche durch die erste Schneidkante entstehender Grat durch eine entgegengesetzte Bewegung des Schneidwerkzeuges mittels der zweiten Schnittkante besonders gut entfernt werden kann. Gemäß der Erfindung sind die Schneidkanten - und damit das Schneidwerkzeug - für translatorische Schnittbewegungen entlang einer Achse in eine erste und eine zweite Richtung bestimmt.

Bevorzugt sind die Schneidkanten in einem Winkel zueinander angeordnet (Anspruch 4). Unter dem Schneidkanten-Winkel wird derjenige verstanden, der in der Ebene der Schnittfläche zwischen Schnittrichtung und Schneidkante gebildet ist. Durch die Wahl eines geeigneten Winkels ist es möglich, bspw. eine Schneidkante für den Hauptschnitt durch Wahl eines bestimmten Schneidwinkels anzupassen, während für das Entgraten die jeweils andere Schneidkante optimiert ist. Auch ist so eine Anpassung eines eventuell vorteilhaften Schnittwinkels in Hinblick auf das Material möglich.

Zweckmäßig ist der Abstand der ersten zu der zweiten Schneidkante gleich oder größer der Länge der Schnittfläche (Anspruch 5) gewählt. Hierdurch ist die Positionierung des Schneidwerkzeugs am Werkstück leicht möglich. Bei Schnittflächen, die bedingt durch die Form des Werkstücks nicht aus allen Richtungen frei zugänglich sind, ist eine Bearbeitung mit dem erfindungsgemäßen Werkzeug nach dieser Ausführungsform trotzdem möglich, solange die Schnittfläche aus einer Richtung über die gesamte Länge zugänglich ist.

Zweckmäßig ist das Schneidwerkzeug mehrteilig (Anspruch 6). So ist das Schneidwerkzeug bevorzugt aus einem ersten Werkzeugteil mit der ersten Schneidkante und aus einem zweiten Werkzeugteil mit der zweiten Schneidkante zusammengesetzt. Erstes und zweites Werkzeugteil werden mittels einer Halterung in definierter Stellung zueinander fixiert. Die Halterung kann integriert an den Werkzeugteilen angeordnet sein. Ein Auswechseln einzelner Werkzeugkomponenten ist, bedingt durch den je nach Anwendung vorhandenen Verschleiß, somit vorteilhafterweise leicht möglich. Auch die Positionierung des Schneidwerkzeugs bei geometrisch kompliziert geformten Werkstücken ist so verbessert.

Zweckmäßig sind die Schneidkanten auswechselbar (Anspruch 7). Da die Schneidkanten einem besonders hohem Verschleiß ausgesetzt sind, ist ein einfaches Auswechseln dieser vorteilhaft. Auch eine Anpassung desselben Schneidwerkzeugs an unterschiedliche Materialien des Werkstücks durch entsprechende Wahl einer Schneidkante ist somit gewährleistet.

Nach einer vorteilhaften Weiterbildung der Erfindung weisen die Schneidkanten einen Spanwinkel von 2° bis 6°, vorzugweise 4° auf (Anspruch 8). Der Spanwinkel ist hierbei der Winkel zwischen Schneidkante und Normale der Werkstückoberfläche. Ein Spanwinkel von 4° hat sich für eine Vielzahl von Werkstückmaterialien verwendbar gezeigt.

Zweckmäßig ist die Länge der Schneidkanten gleich (Anspruch 9). So ist sichergestellt, dass die Schneidkanten eine gleichmäßige Schnittbreite aufweisen. Bevorzugt weisen die Schneidkanten eine Länge von 3 mm auf (Anspruch 10).

Vorteilhaft bestehen die Schneidkanten aus Schnellarbeitsstahl (Anspruch 11). Schnellarbeitsstähle erlauben eine hervorragende Arbeitsgeschwindigkeit bei gleichzeitig geringem Verschleiß. Die Schneidkanten sind so vielseitig an verschiedenen Werkstückmaterialien anwendbar. Alternativ bestehen die Schneidkanten aus Keramik (Anspruch 12). Durch die Verwendung von Keramik erweitert sich der Anwendungsbereich der Schneidkanten nochmals. Der Materialverschleiß der Schneidkanten wird nochmals reduziert und somit die Standzeit des Schneidwerkzeugs deutlich erhöht.

Erfindungsgemäß ist ein Prägestempel zwischen den beiden Schneidkanten angeordnet. Insbesondere beim Bearbeiten von hohlen metallischen Körpern kann eine grundlegende Formgebung bereits durch die Prägung erfolgen. Es ist dann vorteilhafterweise nur noch eine Nachbearbeitung mit den Schneidkanten erforderlich. Der Prägestempel sollte hierbei so ausgeführt sein, dass er einem üblichen Pressdruck beim Prägen standhält. Eine ausreichende Kraftübertragung durch das Schneidwerkzeug sollte des weiteren gewährleistet sein. Der Prägestempel ist zwischen den beiden Schneidkanten angeordnet.

Bevorzugt ist die Breite des Prägestempels in Richtung der Schneidkante im wesentlichen gleich der Länge der Schneidkante (Anspruch 13). Die Anwendbarkeit des Prägestempels ist durch die Längenanpassung an die Schneidkante nochmals verbessert.

Gemäß einer Weiterbildung der Erfindung sind den Schneidkanten jeweils eine oder mehrere Vorschneidkanten in Schnittrichtung der jeweiligen Schneidkante vorgelagert, wobei die Vorschneidkanten der spanenden Bearbeitung dienen, nicht jedoch der Bearbeitung der Schnittfläche (Anspruch 14). Die Vorschneidkanten sind derart ausgelegt, das diese das zu schneidende Material des Werkstücks teilweise entfernen, wodurch insbesondere bei großer Schnittiefe eine ausreichende Schnittqualität bei gleichzeitig hohem Vorschub erreicht wird. Für eine reduzierte Gratbildung ist jedoch wichtig, daß die Vorschneidkanten die durch die Schneidkanten am Werkstück erzeugte Schnittfläche nicht bearbeiten. Weiter bevorzugt sind daher die Vorschneidkanten kürzer als die jeweilige zugeordnete Schneidkante. Insbesondere bevorzugt sind jeder Schneidkante 5-6 Vorschneidkanten vorgelagert.

Nach dem erfindungsgemäßen Verfahren wird die Schnittfläche am Werkstück so gebildet, daß kein Material des Werkstücks über eine Außenkante hinaus verschoben wird. Hierdurch entsteht - wenn überhaupt - nur eine sehr geringe Gratbildung.

Erfindungsgemäß wird die Schnittfläche durch mindestens abschnittsweises Erzeugen der Schnittfläche durch eine erste spanabhebende Bearbeitung mit einer ersten Schneidkante in einer ersten Schnittrichtung und Erzeugen eines weiteren Abschnitts oder der vollständigen Schnittfläche durch eine zweite spanabhebende Bearbeitung mit der ersten oder einer zweiten Schneidkante, wobei die Schnittrichtung bei der zweiten spanabhebenden Bearbeitung ungleich der ersten Schneidrichtung ist. Durch die erste spanabhebende Bearbeitung wird ein Span erzeugt, aber noch nicht vom Werkstück getrennt. Erst mit der zweiten spanabhebenden Bearbeitung wird der Span vom Werk stück getrennt. Das Abtrennen des Spans erfolgt jedoch nicht an einer Außenkante des Werkstücks. Durch diese Maßnahme wird gewährleistet, daß beim Abheben des Spans kein Material des Werkstücks über eine Außenkante des Werkstücks hinaus verschoben wird.

Durch die Bearbeitung in mehreren Bearbeitungsgängen und/oder mit mehreren Schneidkanten findet vorteilhaft eine nochmals verringerte Gratbildung statt. Dadurch, daß bei jedem Bearbeitungsgang die Schnittfläche nur teilweise bearbeitet wird, kann die Bearbeitung an die Formgebung des Werkstücks so angepasst werden, daß dass durch die Zuordnung der Abschnitte der Schnittfläche zu den Schnittrichtungen der Schneidkanten die Gratbildung weiter reduziert wird. Die Bearbeitungsgänge können nacheinander, aber auch gleichzeitig durchgeführt werden.

Gemäß des erfindungsgemäßen Verfahrens ist die Schnittrichtung bei der zweiten spanabhebenden Bearbeitung entgegengesetzt der ersten Schnittrichtung. Hierdurch ist die Durchführung des Verfahrens verbessert, da die Schnittrichtungen der Schneidkanten und somit die Bewegungen der Schneidkanten sämtlich in einer Ebene liegen.

Gemäß einer Weiterbildung der Erfindung wird die Schnittfläche dadurch gebildet, daß in einem ersten Schritt eine erste Schneidkante zum mindestens abschnittsweisen Erzeugen einer Schnittfläche in einer ersten Schnittrichtung an einer ersten Außenkante in die Oberfläche des Werkstücks eintritt, jedoch in der ersten Schnittrichtung nicht aus der Oberfläche des Werkstücks austritt und in einem zweiten Schritt eine erste oder zweite Schneidkante zum vollständigen Erzeugen derselben Schnittfläche in einer zweiten Schnittrichtung an einer zweiten Außenkante der Oberfläche des Werkstücks eintritt, die nicht gleich ist mit der ersten Außenkante, wobei die erste oder zweite Schneidkante beim Vervollständigen der Schnittfläche bzw. beim Abheben des Spans nicht an einer Außenkante aus der Oberfläche des Werkstücks austritt (Anspruch 16).

Die Aufteilung der Bearbeitung der Schnittfläche ist insbesondere dadurch vorteilhaft, da das Werkzeug während eines Bearbeitungsvorgangs keinen Span an einer Außenkante des Werkstücks abschneidet und verhindert wird, daß durch eine nach Außen gerichtete Schnittbewegung an einer Außenkante Material über die Außenkante verschiebt. Es sind somit vorteilhaft nur Bearbeitungsgänge vorgesehen, die ein Abheben des Spans an einer Außenkante des Werkstücks vermeiden. Entsprechend der dadurch verbesserten Kantenformung ist die Gratbildung hierdurch nochmals weiter reduziert. Die Aufteilung der Bearbeitung der Schnittfläche zwischen den beiden Bearbeitungsschritten ist grundsätzlich frei wählbar, es wird jedoch weiterhin bevorzugt in jedem Schritt jeweils eine Hälfte der Schnittfläche gebildet.

Bevorzugt wird bei der Bearbeitung eines Werkstücks mit gewölbter Oberfläche, z. B. eines Rohres oder eines Rundstabes, wobei mindestens eine Außenkante auf der gewölbten Oberfläche liegt, die in dem ersten und zweiten Schritt an den jeweiligen Anßenkanten beginnende spanabhebende Bearbeitung jeweils bis zur Scheitelpunktlinie des gewölbten Profils durchgeführt (Anspruch 17). Die Scheitelpunktlinie des gewölbten Profils bezeichnet die Stelle, an der, bezogen auf die jeweilige Teilschnittfläche, die bereits teilweise in das Werkstück eingetretene Schneidkante nicht weiter während der spanabhebenden Bearbeitung in das Werkstück eintritt, sondern bei weiterer, gleichgerichteter Bewegung beginnt, aufgrund der überschrittenen Scheitelpunktlinie aus dem Werkstück auszutreten. Hierdurch kann vorteilhaft auch am gewölbten Profil des Werkstücks die Gratbildung verringert werden kann.

Bei der bevorzugten Weiterbildung der Erfindung wird die Schnittfläche entsprechend der Wölbung des Werkstücks so zwischen den Bearbeitungsschritten aufgeteilt, daß der Eingriff der jeweiligen Schneidkante in das Werkstück während eines Bearbeitungsschnittes zunimmt.

Zweckmäßig erfolgt nach dem ersten Schritt und vor dem zweiten Schritt mindestens ein Zwischenschritt, bei dem die erste und/oder zweite Schneidkante Abschnitte der Schnittfläche erzeugen, ohne dass die jeweils zur spanabhebenden Bearbeitung eingesetzte Schneidkante aus der Oberfläche des Werkstücks austritt (Anspruch 18). Durch das Vorsehen mindestens eines Zwischenschrittes kann insbesondere bei großen Schnittiefen eine verbesserte Schnittqualität erzielt werden. Auch kann bei Werkstücken, die ein kompliziertes Oberflächenprofil aufweisen, die Gratbildung weiter reduziert werden.

Zweckmäßig werden beide Schnitte gleichzeitig ausgeführt (Anspruch 19). Hierdurch wird die Bearbeitungszeit vorteilhaft verringert.

Gesäß der Erfindung wird vor der spanabhebenden Bearbeitung eine Prägung durchgeführt. Durch eine Prägung vor der spanabhebenden Bearbeitung ist es vorteilhaft möglich, die Schnittfläche vorzuformen. Hierdurch kann das Verfahren effizienter ausgeführt werden. Durch eine Prägung ist es des weiteren insbesondere bei Hohlkörpern möglich, Material der Hohlkörperwandung zunächst in die Ebene der Schnittfläche zu verlagern, um dann eine Schnittfläche zu erzeugen. Für eine Prägung sind grundsätzlich Prägestempel aus jeglichen Materialien und mit beliebigen Formgebungen einsetzbar, es wird jedoch bevorzugt, einen keilförmigen Prägestempel zu verwenden.

Zweckmäßig entspricht die Fläche der Prägung im wesentlichen der Schnittfläche (Anspruch 20). Bei der spanabhebenden Bearbeitung ist somit vorteilhaft für die Formung der Schnittfläche nur noch eine minimale Bearbeitung notwendig. Die Prägung sollte bevorzugt jedoch nicht wesentlich größer sein, als die anschließend geformte Schnittfläche.

Nach einer Weiterbildung des erfindungsgemäßen Verfahrens ist die spanabhebende Bearbeitung ein Schneiden oder Räumen (Anspruch 21). Diese beiden Verfahren ermöglichen eine schnelle Bearbeitung des Werkstücks bei gleichzeitiger günstiger Herstellung eines entsprechenden Schneidwerkzeugs. Des weiteren kann bei einer Räumbearbeitung oder einem Schneiden vorteilhaft eine sehr ebene Schnittfläche erzeugt werden.

Zweckmäßig bearbeitet die Schneidkante das Werkstück in einer translatorischen Beiwegung eben oder auf einer Bogenlinie (Anspruch 22). Hierdurch sind einfache Bewegungsabläufe bei der Bearbeitung gegeben.

Bevorzugt ist die Bearbeitung der Schnittfläche kontinuierlich (Anspruch 23), d.h. durchgängig ohne daß durch die Bearbeitung in mehreren Schritten Absätze oder Stufen entstehen, die ausserhalb der Toleranz des jeweiligen Werkstücks liegen.

Die Erfindung wird nachstehend anhand von Ausführungsbeispielen erläutert. In den Figuren zeigt:
- Fig. 1a: eine perspektivische Ansicht eines Schneidwerkzeugs, das keinen Prägestempel aufweist und daher nicht gemäß dem Anspruch 1 konfiguriert ist.
- Fig.1b: eine perspektivische Ansicht einer ersten Ausführungsform des erfindungsgemäßen Schneidwerkzeugs;
- Fig. 1c: eine perspektivische Ansicht einer zweiten Ausführungsform des erfindungsgemäßen Schneidwerkzeugs;
- Fig. 2: eine perspektivische Ansicht der Schneidwerkzeugs gemäß Fig. 1a anhand eines ersten Bearbeitungsschrittes;
- Fig. 3: eine perspektivische Ansicht der Schneidwerkzeugs gemäß Fig. 1a in einem zweiten Bearbeitungsschritt und
- Fig. 4: eine perspektivische Ansicht des Schneidwerkzeugs gemäß Fig. 1a nach der Bearbeitung.

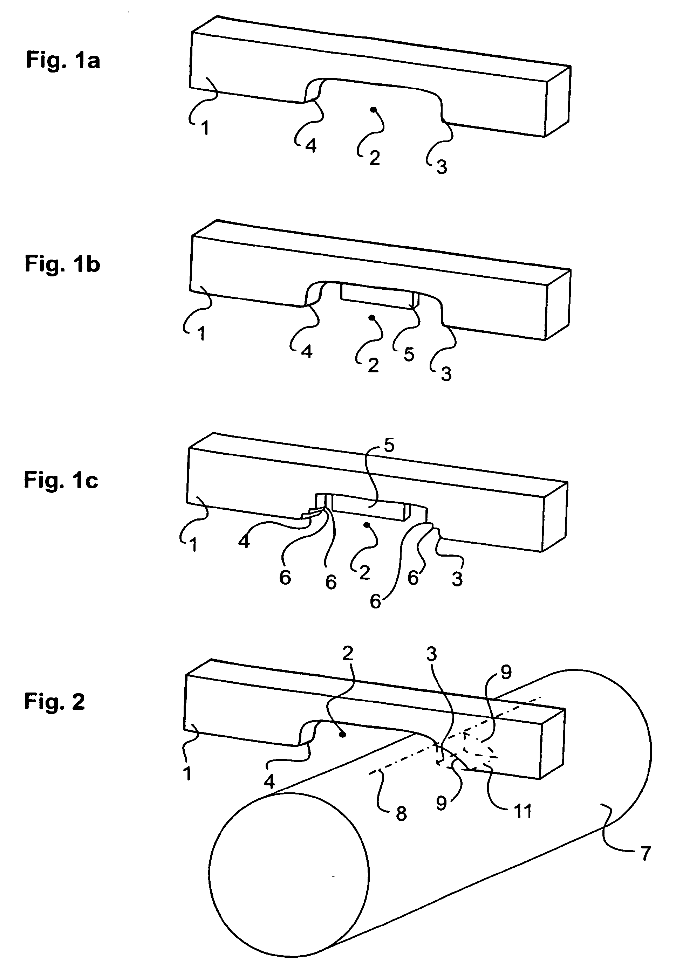

Fig. 1a zeigt ein Schneidwerkzeug 1 zum spanabhebenden Bearbeiten einer Schnittfläche. Das Schneidwerkzeug 1 weist eine Aussparung 2 auf, welche durch eine erste Schneidkante 3 und eine zweite Schneidkante 4 begrenzt ist. Die beiden Schneidkanten 3, 4 sind derart angeordnet, daß die Schnittrichtungen der beiden Schneidkanten 3, 4 gegeneinander zeigen. Zur effizienten Bearbeitung von metallischen Werkstücken weisen die Schneidkanten 3,4 einen Schnittwinkel von 4° auf. Das Schneidwerkzeug 1 besteht aus einem Schnellarbeitsstahl und weist eine nicht gezeigte Halterung zur Aufnahme in üblichen Werkzeugmaschinen auf. Der Abstand der beiden Schneidkanten 3, 4 ist größer als die Länge der Schnittfläche des beabsichtigten Schnitts am Werkstück um eine einfache Anordnung des Werkzeugs am Werkstück zu ermöglichen.

In Fig. 1b ist eine erste Ausführungsform eines erfindungsgemäßigen Schneidwerkzeugs 1 gezeigt. Gegenüber dem Schneidwerkzeug gemäß Fig. 1a weist die erste Ausführungsform einen Prägestempel 5 auf, welcher in der Aussparung 2 angeordnet ist. Der Prägestempel 5 ist massiv ausgeführt und ermöglicht insbesondere bei der Bearbeitung von Hohlkörpern eine Vorformung der Schnittfläche durch ein Einpressen oder ein Eindrücken des Werkstückmaterials.

Eine zweite Ausführungsform des erfindungsgemäßen Schneidwerkzeugs ist in Fig. 1c gezeigt. Die zweite Ausführungsform unterscheidet sich von der in Fig. 1b gezeigten ersten Ausführungsform des Schneidwerkzeugs dadurch, daß der ersten und zweiten Schneidkante 3, 4 jeweils zwei Vorschneidkanten 6 vorgelagert sind. Die Vorschneidkanten 6 sind zur gratfreien Bearbeitung derart angeordnet, daß diese das zwischen Schnittfläche und Oberfläche des Werkstücks vorhandene Material bereits vor der Erzeugung der Schnittfläche durch die Schneidkanten 3, 4 teilweise entfernen. Insbesondere bei hohen Schnitt-Tiefen wird durch die Vorlagerung von Vorschneidkanten 6 eine ausreichende Schnittqualität gewährleistet.

Die Anwendung des in Fig. 1a gezeigten Schneidwerkzeugs in einem Verfahren, das Teil des erfindungsgemäßigen Verfahren bildet, ist in Fig. 2 in einem Ausführungsbeispiel eines ersten Bearbeitungsschritts gezeigt.

In dem ersten Bearbeitungsschritt wird mit Hilfe der ersten Schneidkante 3 ein erster Teil der Schnittfläche 10 erzeugt. Hierzu wird das Metallrohr 7 in die Aussparung 2 des Schneidwerkzeugs geführt. Unter entsprechender Vorschubkraft wird die erste Schneidkante 3 auf das Rohr gedrückt und tritt an einer ersten Außenkante 11 durch die Oberfläche in das Werkstück ein, wodurch der Schneidvorgang beginnt. Der Vortrieb des Schneidwerkzeugs 1 wird so bemessen, daß die erste Schneidkante 3 bis zur Scheitelpunktlinie des gewölbten Profils 8 des Rohres in das Metallrohr vordringt. Dieser Zustand ist in Fig. 2 gezeigt. Durch diese Bearbeitung entsteht an den in Schneidrichtung der ersten Schneidkante 3 zunehmenden Flanken der Seitenkanten der Schnittfläche 9 kein Materialaustritt und somit keine Gratbildung. An der ersten Außenkante 11 der Bearbeitung der ersten Schneidkante 3 entsteht durch die einwärtsgerichtete Bewegung der ersten Schneidkante 3 ebenfalls kein Grat.

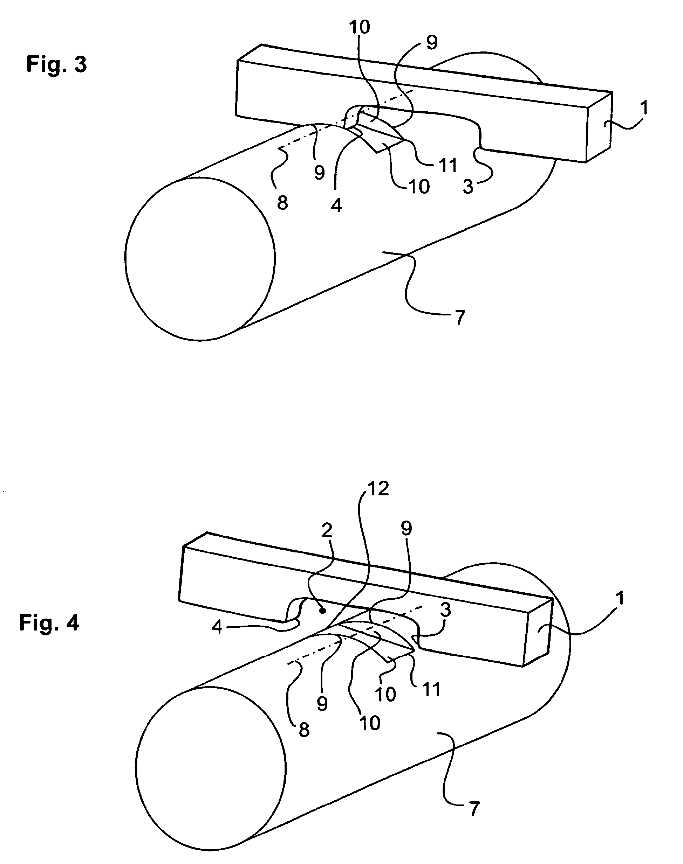

In einem zweiten Verfahrensschritt wird das Schneidwerkzeug 1 nun in entgegengesetzter Richtung bewegt, wodurch die erste Schneidkante 3 an der ersten Außenkante 11 die Schnittfläche 10 verläßt und die zweite Schneidkante 4 darauf folgend den zweiten Teil der Schnittfläche 10 beginnend an der zweiten Außenkante 12 durch spanabhebende Bearbeitung erzeugt. Der Vortrieb der zweiten Schneidkante 4 wird wiederum so bemessen, daß die zweite Schneidkante 4 bis zur Scheitelpunktlinie des gewölbten Profils 8 des Rohres in das Metallrohr eindringt. Dieser Zustand ist in Fig. 3 gezeigt. Durch die wiederum in Schnittrichtung der zweiten Schneidkante 4 ansteigende Flanke der Seitenkanten der Schnittfläche 9 tritt an den Seitenkanten 9 kein Material aus, wodurch keine Gradbildung entsteht. Bei weiterem Vortrieb des Schneidwerkzeugs 1 in Schnittrichtung der zweiten Schneidkante 4 wird der entstandene Span durch die zweite Schneidkante 4 mitgenommen und kann bei Verlassen der Schnittfläche 10 seitlich des Metallrohrs 7 abgesaugt werden.

Das fertig bearbeitete Metallrohr 7 mit einem nutenförmigen Schnitt ist in Fig. 4 gezeigt. Das Metallrohr 7 verfügt über eine durchgehende Schnittfläche 10, wobei an den Kanten der Schnittfläche 9 kein Grat vorhanden ist.

Das dargestellte Verfahren ist in gleicher Weise auch mit den Ausführungsformen des Schneidwerkzeugs 1 gemäß Fig. 1b und Fig. 1c durchführbar. Unter Verwendung des Schneidwerkzeugs 1 gemäß der ersten oder zweiten Ausführungsform geht dem soeben dargestellten Verfahren lediglich ein weiterer Prägeschritt vor, bei dem der Prägestempel 5 durch Ausübung eines geeigneten Druckes über das Schneidwerkzeug 1 die Schnittfläche 10 vorformt.

## Patentansprüche

1. Schneidwerkzeug (1) zum spanabhebenden Bearbeiten einer Schnittfläche (10) eines Körpers aus Metall wobei das Schneidwerkzeug (1) mindestens eine erste und eine zweite Schneidkante (3, 4) aufweist, die zur Bearbeitung mindestens von Abschnitten derselben Schnittfläche (10) geeignet und derart angeordnet sind, dass die Schnittrichtung der beiden Schneidkanten (3, 4) ungleich werden kann,
**dadurch gekennzeichnet, dass**
ein Prägestempel (5) zwischen den beiden Schneidkanten (3, 4) angeordnet ist, wobei die Schneidkanten (3, 4) für translatorische Bewegungen bestimmt sind.

2. Schneidwerkzeug (1) zum spanabhebenden Bearbeiten von Körpern aus Metall nach Anspruch 1, **dadurch gekennzeichnet, dass** die Schneidkanten (3,2) im Rahmen der vorgegebenen Toleranzen für die Bearbeitung derselben Schnittfläche (10) bestimmt sind.

3. Schneidwerkzeug (1) zum spanabhebenden Bearbeiten von Körpern aus Metall nach Anspruch 1 oder 2, **dadurch gekennzeichnet, daß** die Schnittrichtung der Schneidkanten (3,4) gegeneinander zeigt.

4. Schneidwerkzeug (1) zum spanabhebenden Bearbeiten von Körpern aus Metall nach einem der vorangehenden Ansprüche, **dadurch gekennzeichnet, dass** die Schneidkanten (3,4) in einem Winkel zueinander angeordnet sind.

5. Schneidwerkzeug (1) zum spanabhebenden Bearbeiten von Körpern aus Metall nach einem der vorangehenden Ansprüche, **dadurch gekennzeichnet, daß** der Abstand zwischen der ersten und der zweiten Schneidkante (3, 4) gleich oder größer der Länge der Schnittfläche (10) ist.

6. Schneidwerkzeug (1) zum spanabhebenden Bearbeiten von Körpern aus Metall nach einem der vorangehenden Ansprüche, **dadurch gekennzeichnet, daß** das Schneidwerkzeug (1) mehrteilig ist.

7. Schneidwerkzeug (1) zum spanabhebenden Bearbeiten von Körpern aus Metall nach Anspruch 6, **dadurch gekennzeichnet, daß** die Schneidkanten (3,4) auswechselbar sind.

8. Schneidwerkzeug (1) zum spanabhebenden Bearbeiten von Körpern aus Metall nach einem der vorangehenden Ansprüche, **dadurch gekennzeichnet, daß** die Schneidkanten (3,4) einen Spanwinkel von 2° bis 6°, bevorzugt von 4° aufweisen.

9. Schneidwerkzeug (1) zum spanabhebenden Bearbeiten von Körpern aus Metall nach einem der vorangehenden Ansprüche, **dadurch gekennzeichnet, daß** die Länge der Schneidkanten (3,4) gleich ist.

10. Schneidwerkzeug (1) zum spanabhebenden Bearbeiten von Körpern aus Metall nach Anspruch 9, **dadurch gekennzeichnet, daß** die Schneidkanten (3,4) eine Länge von 3mm aufweisen.

11. Schneidwerkzeug (1) zum spanabhebenden Bearbeiten von Körpern aus Metall nach einem der vorangehenden Ansprüche, **dadurch gekennzeichnet, daß** mindestens die Schneidkanten (3,4) aus Schnellarbeitsstahl bestehen.

12. Schneidwerkzeug (1) zum spanabhebenden Bearbeiten von Körpern aus Metall nach einem Ansprüche 1-10, **dadurch gekennzeichnet, daß** mindestens die Schneidkanten (3,4) aus Keramik bestehen.

13. Schneidwerkzeug (1) zum spanabhebenden Bearbeiten von Körpern aus Metall nach Anspruch 12, **dadurch gekennzeichnet, daß** die Breite des Prägestempels (5) in Richtung der Schneidkante (z.B. 3) im wesentlichen gleich der Länge der Schneidkante (z.B. 3) ist.

14. Schneidwerkzeug (1) zum spanabhebenden Bearbeiten von Körpern aus Metall nach einem der vorangehenden Ansprüche, **dadurch gekennzeichnet, daß** den Schneidkanten (3,4) jeweils eine oder mehrere Vorschneidkanten (6) in Schnittrichtung der jeweiligen Schneidkante (z.B. 3) vorgelagert sind, wobei die Vorschneidkanten (6) der spanenden Bearbeitung dienen, nicht jedoch der Bearbeitung der Schnittfläche (10).

15. Verfahren zum Erzeugen einer Schnittfläche (10) an einem Werkstück aus Metall mittels spanabhebender Bearbeitung des Werkstücks durch ein Werkzeug mit mindestens einer Schneidkante (z.B. 3), wobei die Schnittfläche (10) mindestens eine Außenkante (z.B. 11) aufweist, und wobei die spanabhebende Bearbeitung in der Weise erfolgt, dass eine Verschiebung des Materials des Werkstücks über die Außenkante (z.B. 11) unterbleibt,
**gekennzeichnet durch** die Schritte
- Durchführung einer Prägung des Werkstücks vor der spanabhebenden Bearbeitung,
- mindestens abschnittsweises Erzeugen der Schnittfläche (10) **durch** eine erste spanabhebende Bearbeitung mit einer ersten Schneidkante (3) in einer ersten Schnittrichtung und
- Erzeugen eines weiteren Abschnitts oder der vollständigen Schnittfläche (10) durch eine zweite spanabhebende Bearbeitung mit der ersten oder einer zweiten Schneidkante (3,4), wobei die Schnittrichtung bei der zweiten spanabhebenden Bearbeitung entgegengesetzt der ersten Schnittrichtung ist.

16. Verfahren zum Erzeugen einer Schnittfläche (10) an einem Werkstück aus Metall nach Anspruch 15, **dadurch gekennzeichnet, daß**
- in einem ersten Schritt eine erste Schneidkante (3) zum mindestens abschnittsweisen Erzeugen einer Schnittfläche (10) in einer ersten Schnittrichtung an einer ersten Außenkante (11) in die Oberfläche des Werkstücks eintritt, jedoch in der ersten Schnittrichtung nicht aus der Oberfläche des Werkstücks austritt und
- in einem zweiten Schritt eine erste oder zweite Schneidkante (3,4) zum vollständigen Erzeugen derselben Schnittfläche (10) in einer zweiten Schnittrichtung an einer zweiten Außenkante (12) der Oberfläche des Werkstücks eintritt, die nicht gleich ist mit der ersten Außenkante (11), wobei die erste oder zweite Schneidkante (3,4) beim Vervollständigen der Schnittfläche (10) nicht aus einer Außenkante (z.B. 11) der Oberfläche des Werkstücks austritt.

17. Verfahren zum Erzeugen einer Schnittfläche (10) an einem Werkstück aus Metall nach Anspruch 16, **dadurch gekennzeichnet, daß**
- bei der Bearbeitung eines Werkstücks mit gewölbter Oberfläche,
- wobei mindestens eine Außenkante (z.B. 11) auf der gewölbten Oberfläche liegt,
- die in dem ersten und zweiten Schritt an den jeweiligen Außenkanten (11, 12) beginnende spanabhebende Bearbeitung jeweils bis zur Scheitelpunktlinie des gewölbten Profils (8) durchgeführt wird.

18. Verfahren zum Erzeugen einer Schnittfläche (10) an einem Werkstück aus Metall nach einem der Ansprüche 16-17, **dadurch gekennzeichnet, daß** nach dem ersten Schritt und vor dem zweiten Schritt mindestens ein Zwischenschritt erfolgt, bei dem die erste und/oder zweite Schneidkante (3,4) Abschnitte der Schnittfläche (10) erzeugen, ohne dass die jeweils zur spanabhebenden Bearbeitung eingesetzte Schneidkante (3,4) aus der Oberfläche des Werkstücks austritt.

19. Verfahren zum Erzeugen einer Schnittfläche (10) an einem Werkstück aus Metall nach einem der Ansprüche 16-17, **dadurch gekennzeichnet, daß** die beiden Schritte gleichzeitig ausgeführt werden.

20. Verfahren zum Erzeugen einer Schnittfläche (10) an einem Werkstück aus Metall nach einem der vorangehenden Ansprüche, **dadurch gekennzeichnet, daß** die Fläche der Prägung im wesentlichen der Schnittfläche (10) entspricht

21. Verfahren zum Erzeugen einer Schnittfläche (10) an einem Werkstück aus Metall nach einem der Ansprüche 15-20, **dadurch gekennzeichnet, daß** die spanabhebende Bearbeitung ein Schneiden oder Räumen ist.

22. Verfahren zum Erzeugen einer Schnittfläche (10) an einem Werkstück aus Metall nach einem der Ansprüche 15-21, **dadurch gekennzeichnet, daß** die Schneidkante (z.B. 3) das Werkstück in einer translatorischen Bewegung eben oder auf einer Bogenlinie bearbeitet.

23. Verfahren zum Erzeugen einer Schnittfläche (10) an einem Werkstück aus Metall nach einem der Ansprüche 15-22, **dadurch gekennzeichnet, daß** die Bearbeitung der Schnittfläche (10) kontinuierlich ist.

24. Verfahren zum Erzeugen einer Schnittfläche (10) an einem Werkstück aus Metall nach einem der Ansprüche 15-23, **dadurch gekennzeichnet, daß** ein Schneidwerkzeug (1) nach einem der Ansprüche 1-14 verwendet wird.

## Claims

1. Cutting tool (1) for the machining down of a cut surface (10) of a body made of metal, whereby the cutting tool (1) has at least a first and a second cutting edge (3, 4) which are appropriate for the machining of at least sections of the same cut surface (10) and which are placed in such a manner that the cutting direction of both cutting edges (3, 4) can be different,
**characterized in that**
a stamping punch (5) is placed between the two cutting edges (3, 4), whereby the cutting edges (3, 4) are defined for translational movements.

2. Cutting tool (1) for the machining down of bodies made of metal according to claim 1, **characterized in that** the cutting edges (3, 2) are defined within the limits of the predetermined tolerances for the machining of the same cut surface (10).

3. Cutting tool (1) for the machining down of bodies made of metal according to claim 1 or 2, **characterized in that** the cutting direction of the cutting edges (3, 4) shows in the opposite direction.

4. Cutting tool (1) for the machining down of bodies made of metal according to one of the preceding claims, **characterized in that** the cutting edges (3, 4) are placed at an angle to each other.

5. Cutting tool (1) for the machining down of bodies made of metal according to one of the preceding claims, **characterized in that** the distance between the first and the second cutting edge (3, 4) is equal or bigger than the length of the cut surface (10).

6. Cutting tool (1) for the machining down of bodies made of metal according to one of the preceding claims, **characterized in that** the cutting tool (1) is made of several parts.

7. Cutting tool (1) for the machining down of bodies made of metal according to claim 6, **characterized in that** the cutting edges (3, 4) are replaceable.

8. Cutting tool (1) for the machining down of bodies made of metal according to one of the preceding claims, **characterized in that** the cutting edges (3, 4) have an effective cutting angle of 2° to 6°, preferably of 4°.

9. Cutting tool (1) for the machining down of bodies made of metal according to one of the preceding claims, **characterized in that** the length of the cutting edges (3, 4) is the same.

10. Cutting tool (1) for the machining down of bodies made of metal according to claim 9, **characterized in that** the cutting edges (3, 4) have a length of 3 mm.

11. Cutting tool (1) for the machining down of bodies made of metal according to one of the preceding claims, **characterized in that** at least the cutting edges (3, 4) are made of high-speed steel.

12. Cutting tool (1) for the machining down of bodies made of metal according to any of the claims 1-10, **characterized in that** at least the cutting edges (3, 4) are made of ceramics.

13. Cutting tool (1) for the machining down of bodies made of metal according to claim 12, **characterized in that** the width of the stamping punch (5) in direction of the cutting edge (for ex. 3) is substantially equal to the length of the cutting edge (for ex. 3).

14. Cutting tool (1) for the machining down of bodies made of metal according to one of the preceding claims, **characterized in that** respectively one or several edges for preparatory cutting (6) are placed in front of each of the cutting edges (3, 4) in cutting direction of the respective cutting edge (for ex. 3), whereby the edges for preparatory cutting (6) serve to the machining down but not to the machining of the cut surface (10).

15. Method for producing a cut surface (10) on a work piece of metal by means of machining down of the work piece by a tool with at least one cutting edge (for ex. 3), whereby the cut surface (10) has at least one outer edge (for ex. 11) and whereby the machining down takes place in a manner which is such that there is no displacement of the material of the work piece over the outer edge (for ex. 11),
**characterized by** the steps
- carrying out of a stamping of the work piece before machining down,
- at least producing of a section of the cut surface (10) by a first machining down operation with a first cutting edge (3) in a first cutting direction and
- production of a further section or of the whole cut surface (10) by a second machining down operation with the first or with a second cutting edge (3, 4), whereby the cutting direction of the second machining down operation is opposed to the first cutting direction.

16. Method for producing a cut surface (10) on a work piece of metal according to claim 15, **characterized in that**
- in a first step a first cutting edge (3) for the production of at least one section of a cut surface (10) in a first cutting direction on a first outer edge (11) enters the surface of the work piece, however does not come out of the surface of the work piece in the first cutting direction and
- in a second step a first or a second cutting edge (3, 4) for the complete production of the same cut surface (10) in a second cutting direction on a second outer edge (12) enters the surface of the work piece which is not equal to the first outer edge (11), whereby the first or the second cutting edge (3, 4) when completing the cut surface (10) does not come out of an outer edge (for ex. 11) of the surface of the work piece.

17. Method for producing a cut surface (10) on a work piece made of metal according to claim 16, **characterized in that**
- when machining a work piece with a vaulted surface
- whereby at least one outer edge (for ex. 11) is situated on the vaulted surface
- the machining down which begins in the first and second step on the respective outer edges (11, 12) is carried out respectively up to the line of summit of the vaulted profile (8).

18. Method for producing a cut surface (10) on a work piece made of metal according to any of the claims 16-17, **characterized in that** after the first step and before the second step at least one intermediate step is carried out for which the first and/or the second cutting edge (3, 4) produce sections of the cut surface (10) without the cutting edge (3, 4) used respectively for the machining down coming out of the surface of the work piece.

19. Method for producing a cut surface (10) on a work piece made of metal according to one of the claims 16-17, **characterized in that** both steps are carried out simultaneously.

20. Method for producing a cut surface (10) on a work piece made of metal according to one of the preceding claims, **characterized in that** the surface of the stamping substantially corresponds to the cut surface (10).

21. Method for producing a cut surface (10) on a work piece made of metal according to one of the claims 15-20, **characterized in that** the machining down is a cutting or broaching.

22. Method for producing a cut surface (10) on a work piece made of metal according to one of the claims 15-21, **characterized in that** the cutting edge (for ex. 3) machines the work piece in a translational movement flat or on a curve line.

23. Method for producing a cut surface (10) on a work piece made of metal according to one of the claims 15-22, **characterized in that** the machining of the cut surface (10) is continuous.

24. Method for producing a cut surface (10) on a work piece made of metal according to one of the claims 15-23, **characterized in that** a cutting tool (1) according to one of the claims 1-14 is used.

## Revendications

1. Outil de coupe (1) pour l'usinage par enlèvement de copeaux d'une surface de coupe (10) d'un corps en métal, l'outil de coupe (1) présentant au moins une première arête de coupe et une seconde arête de coupe (3, 4) qui conviennent pour l'usinage d'au moins des sections de la même surface de coupe (10) et qui sont placées de telle manière que le sens de coupe des arêtes de coupe (3, 4) peut être différent,
**caractérise en ce**
**qu'**un poinçon d'estampage (5) est placé entre les deux arêtes de coupe (3, 4), les arêtes de coupe (3, 4) étant définies pour des mouvements de translation.

2. Outil de coupe (1) pour l'usinage par enlèvement de copeaux de corps en métal selon la revendication 1, **caractérisé en ce que** les arêtes de coupe (3, 2) sont définies dans le cadre des tolérances prédéfinies pour l'usinage de la même surface de coupe (10).

3. Outil de coupe (1) pour l'usinage par enlèvement de copeaux de corps en métal selon la revendication 1 ou 2, **caractérisé en ce que** le sens de coupe des arêtes de coupe (3, 4) est orienté en sens opposé.

4. Outil de coupe (1) pour l'usinage par enlèvement de copeaux de corps en métal selon l'une des revendications précédentes, **caractérisé en ce que** les arêtes de coupe (3, 4) sont placées dans un angle l'une par rapport à l'autre.

5. Outil de coupe (1) pour l'usinage par enlèvement de copeaux de corps en métal selon l'une des revendications précédentes, **caractérisé en ce que** la distance entre la première arête de coupe et la seconde arête de coupe (3, 4) est égale ou supérieure à la longueur de la surface de coupe (10).

6. Outil de coupe (1) pour l'usinage par enlèvement de copeaux de corps en métal selon l'une des revendications précédentes, **caractérisé en ce que** l'outil de coupe (1) est en plusieurs parties.

7. Outil de coupe (1) pour l'usinage par enlèvement de copeaux de corps en métal selon la revendication 6, **caractérisé en ce que** les arêtes de coupe (3, 4) sont remplaçables.

8. Outil de coupe (1) pour l'usinage par enlèvement de copeaux de corps en métal selon l'une des revendications précédentes, **caractérisé en ce que** les arêtes de coupe (3, 4) présentent un angle de coupe orthogonal de 2° à 6°, de préférence de 4°.

9. Outil de coupe (1) pour l'usinage par enlèvement de copeaux de corps en métal selon l'une des revendications précédentes, **caractérisé en ce que** la longueur des arêtes de coupe (3, 4) est égale,

10. Outil de coupe (1) pour l'usinage par enlèvement de copeaux de corps en métal selon la revendication 9, **caractérisé en ce que** les arêtes de coupe (3, 4) présentent une longueur de 3 mm.

11. Outil de coupe (1) pour l'usinage par enlèvement de copeaux de corps en métal selon l'une des revendications précédentes,
**caractérisé en ce qu'**au moins les arêtes de coupe (3, 4) sont en acier à coupe rapide.

12. Outil de coupe (1) pour l'usinage par enlèvement de copeaux de corps en métal selon l'une des revendications 1 à 10, **caractérisé en ce qu'**au moins les arêtes de coupe (3, 4) sont en céramique.

13. Outil de coupe (1) pour l'usinage par enlèvement de copeaux de corps en métal selon la revendication 12, **caractérisé en ce que** la largeur du poinçon d'estampage (5) dans le sens de l'arête de coupe (par ex, 3) est sensiblement égale à la longueur de l'arête de coupe (par ex. 3).

14. Outil de coupe (1) pour l'usinage par enlèvement de copeaux de corps en métal selon l'une des revendications précédentes, **caractérisé en ce que** respectivement une ou plusieurs arêtes de prédécoupage (6) dans le sens de coupe de l'arête de coupe respective (par ex. 3) sont placées en amont des arêtes de coupe (3, 4), les arêtes de prédécoupage (6) servant à l'usinage par enlèvement des copeaux mais pas à l'usinage de la surface de coupe (10).

15. Procédé pour produire une surface de coupe (10) sur une pièce à travailler en métal par usinage de la pièce à travailler par enlèvement de copeaux par un outil avec au moins une arête de coupe (par ex. 3), la surface de coupe (10) présentant au moins une arête extérieure (par ex. 11) et l'usinage par enlèvement de copeaux se fait de manière à ce qu'il n'y ait pas de déplacement du matériau de la pièce à travailler sur l'arête extérieure (par ex. 11),
**caractérisé par** les étapes :
- réalisation d'un estampage de la pièce à travailler avant l'usinage par enlèvement de copeaux,
- au moins production par section de la surface de coupe (10) par un premier usinage par enlèvement de copeaux avec une première arête de coupe (3) dans un premier sens de coupe et
- production d'une autre section ou de la surface de coupe complète (10) par un second usinage par enlèvement de copeaux avec la première ou une seconde arête de coupe (3, 4), le sens de coupe pour le second usinage par enlèvement de copeaux étant opposé au premier sens de coupe.

16. Procédé pour la production d'une surface de coupe (10) sur une pièce à travailler en métal selon la revendication 15, **caractérisée en ce**
- **que** dans une première étape, pour produire au moins par section une surface de coupe (10) dans un premier sens de coupe sur une première arête extérieure (11), une première arête de coupe (3) entre dans la surface de la pièce à travailler mais dans le premier sens de coupe ne sort pas de la surface de la pièce à travailler et
- **que** dans une seconde étape une première ou une seconde arête de coupe (3, 4) pour produire complètement la même surface de coupe (10) dans un second sens de coupe sur une seconde arête extérieure (12) entre dans la surface de la pièce à travailler qui n'est pas égale à la première arête extérieure (11), la première ou la seconde arête de coupe (3, 4) ne sortant pas, lors de la complétion de la surface de coupe (10), d'une arête extérieure (par ex. 11) de la surface de la pièce à travailler.

17. Procédé pour produire une surface de coupe (10) sur une pièce à travailler en métal selon la revendication 16, **caractérisé en ce que**
- lors de l'usinage d'une pièce à travailler avec une surface voûtée,
- au moins une arête extérieure (par ex. 11) étant située sur la surface voûtée,
- l'usinage par enlèvement de copeaux qui commence dans la première et la seconde étape sur les arêtes extérieures respectives (11, 12) est réalisé respectivement jusqu'à la ligne de sommet du profil voûté (8).

18. Procédé pour produire une surface de coupe (10) sur une pièce à travailler en métal selon l'une des revendications 16 à 17, **caractérisé en ce qu'**après la première étape et avant la seconde étape il est réalisé au moins une étape intermédiaire pour laquelle la première et/ou la seconde arête de coupe (3, 4) produisent de sections de la surface de coupe (10) sans que l'arête de coupe (3, 4) respectivement utilisée pour l'usinage par enlèvement de copeaux sorte de la surface de la pièce à travailler.

19. Procédé pour produire une surface de coupe (10) sur une pièce à travailler en métal selon l'une des revendications 16 à 17, **caractérisé en ce que** les deux étapes sont réalisées simultanément.

20. Procédé pour produire une surface de coupe (10) sur une pièce à travailler en métal selon l'une des revendications précédentes, **caractérisé en ce que** la surface de l'estampage correspond sensiblement à la surface de coupe (10).

21. Procédé pour produire une surface de coupe (10) sur une pièce à travailler en métal selon l'une des revendications 15 à 20, **caractérisé en ce que** l'usinage par enlèvement de copeaux est un découpage ou un enlèvement.

22. Procédé pour produire une surface de coupe (10) sur une pièce à travailler en métal selon l'une des revendications 15 à 21, **caractérisé en ce que** l'arête de coupe (par ex. 3) usine la pièce à travailler dans un mouvement de translation à plat ou sur une ligne courbée.

23. Procédé pour produire une surface de coupe (10) sur une pièce à travailler en métal selon l'une des revendications 15 à 22, **caractérisé en ce que** l'usinage de la surface de coupe (10) est continue.

24. Procédé pour produire une surface de coupe (10) sur une pièce à travailler en métal selon l'une des revendications 15 à 23, **caractérisé en ce qu'**un outil de coupe (1) selon l'une des revendications 1 à 14 est utilisé.
